# EUROPÄISCHE PATENTSCHRIFT

(11) **EP 3 867 932 B1**
(45) Veröffentlichungstag und Bekanntmachung des Hinweises auf die Patenterteilung: **30.09.2026**
(21) Anmeldenummer: 19783310.6
(22) Anmeldetag: 07.10.2019
(51) Int. Cl.: H01F 7/122, F16K 31/08, H01F 7/16

(54) **ELEKTROMAGNETISCHES VENTIL**
ELECTROMAGNETIC VALVE
SOUPAPE ÉLECTROMAGNÉTIQUE

(30) Priorität: 18.10.2018 DE 102018008266
(43) Veröffentlichungstag der Anmeldung: 25.08.2021
(73) Patentinhaber: GEA Tuchenhagen GmbH, 21514 Büchen (DE)
(72) Erfinder: ARNOLD, Wolfgang, 71577 Großerlach (DE); PRETTEREBNER, Julius, 71134 Aidlingen (DE); MAGNUS, Hans-peter, 70499 Stuttgart (DE)
(74) Vertreter: Hauck Patent- und Rechtsanwälte PartmbB
(86) Internationale Anmeldenummer: PCT/EP2019/077066
(87) Internationale Veröffentlichungsnummer: WO 2020/078751

(56) Entgegenhaltungen:
- CN-Y- 2 517 929
- DE-A1- 102015 005 369
- DE-A1- 4 215 145
- JP-A- S6 078 180
- US-A1- 2007 241 298
- US-B2- 8 576 032

## Beschreibung

Die Erfindung betrifft eine Prozesskomponente nach dem Oberbegriff des ersten Anspruchs.

In der Lebensmittelindustrie, der Biotechnologie und in der Pharmazie werden höchste Anforderungen an die Sauberkeit, Reinigbarkeit und Geschlossenheit der Produktionsanlagen und ihrer Prozesskomponenten gestellt.

In einer Art Prozesskomponente wird ein Stellkörper in ihrem Inneren zwischen zwei Endstellungen bewegt, beispielsweise in einem Ventil das Schließelement zwischen einer Offen- und einer Schließstellung. Die Herausforderung ist es nun, zur Herstellung hygienischer und aseptischer Bedingungen das Innere der Prozesskomponente gegen einen Außenraum abgedichtet zu halten und gleichzeitig vom Außenraum eine Bewegung des Stellkörpers im Inneren zu bewirken.

In der Ventiltechnik ist hierzu bekannt, den Durchtritt einer Schaltstange, die Antrieb und Schließelement miteinander verbindet, in das Ventilgehäuse mit einem Balg EP 945658 B1 oder einer Membran WO2013/170931 A1 abzudichten. Die mechanische Belastung dieser Dichtelemente stellt jedoch eine Schwachstelle dar.

Vorteilhafter wäre es, die Bewegung des Schließelements berührungsfrei und ohne Schaltstange auszuführen. Dies ist im Bereich der so genannten Füllventile bekannt, mit denen beispielsweise Flaschen und Dosen befüllt werden.

Die DE 1 600 717 schlägt vor, das Schließelement als Magnetkern auszuführen, welcher in einer Magnetspule angeordnet ist und durch diese bewegt wird. In der Offenstellung wird das Schließelement an seiner gesamten Außenfläche von einem strömenden Medium umspült.

Die DE 600 21 062 stellt ein Ventil mit einem nadelförmigen Schließelement vor. In einer Offenstellung und in einer Schließstellung wird das Schließelement von den Kräften jeweils einer Dauermagnetanordnung gehalten. Jede Dauermagnetanordnung ist einer der Stellungen zugeordnet. Zu jeder Stellung ist zudem eine elektrische Spule vorgesehen, mit der das Schließelement gegen die Haltekraft der Dauermagnetanordnung der jeweils anderen Stellung bewegt werden kann.

Diese Lösungen sind zum Teil seit Jahrzehnten bekannt und werden für vergleichsweise kleine Fluidströmungen und -drücke eingesetzt. Sie sind jedoch bisher noch nie für größere Rohrleitungsquerschnitte, beispielsweise im Durchmesserbereich von 50 mm bis 200 mm, eingesetzt worden.

Aus JPS 6078180 A ist ein Ventil bekannt mit einer zwischen einem oberen und einem unteren Fluiddurchgang angeordneten Fließkammer, in der ein Stellkörper mit einem Permanentmagneten angeordnet ist. Elektromagneten und Permanentmagneten sind weiterhin in der Umgebung bzw. innerhalb der Vlieskammer angeordnet und weitere Elektromagneten außerhalb. Zum Schalten des Stellkörpers werden die Elektromagneten bestromt.

Aus US 2007/0241298 A1 ist ein Aktuator bekannt mit einem Radialmagneten und einer Solenoidspule, der dazu ausgebildet ist, eine Armatur linear zu verstellen indem die Spule bestromt wird. Der Aktuator kann eine flexible Membran umfassen, die die Armatur teilweise umgibt und so eine Armaturkammer bildet.

Aus DE 10 2015 005 369 A1 ist ein bistabiles Magnetventil für ein Fluidsystem bekannt mit einem in Axialrichtung verstellbaren Anker, einem ersten Kern, einem zweiten Kern, einer Permanentmagneteinrichtung zur Ausbildung eines ersten Permanentmagnetfelds, das über ein magnetisches Joch, den ersten Kern und den Anker verläuft, und eines zweiten Permanentmagnetfeldes, das über das magnetische Joch, den zweiten Kern und den Anker verläuft. Der Anker ist bistabil mit zwei Ankerstellungen zur Anlage an jeweils einem der Kerne unter Ausbildung eines Luftspaltes zu dem anderen Kern ausgebildet. Eine erste und zweite Elektromagneteinrichtung dient zur Ausbildung eines ersten und zweiten Elektromagnetfeldes, das über den Anker, das magnetische Joch und jeweils einen der Kerne verläuft. Die Permanentmagneteinrichtung ist in radialer Richtung relativ zu der Axialrichtung magnetisiert.

DE 42 15 145 A1 beschreibt einen Linearmotor mit einem Gehäuse, in dem Ankermittel hin und her bewegbar angeordnet sind. Steuerspulmittel in Form von axial beabstandeten Steuerspulen sind stationär im Gehäuse angeordnet und können über Anschlüsse mit einem Steuersignal erregt werden. Radial polarisierte Dauer- oder Permanentmagnetmittel sind in etwa mit dem gleichen Radialabstand gegenüber der Längsachse des Linearmotors für die Spulenmittel vorgesehen. Weiterhin sind Polmittel vorhanden zum Leiten der von den Steuerspulenmitteln sowie den Dauermagnetmitteln herrührenden Magnetfeldern. Das Gehäuse weist ein beispielsweise aus Weicheisen bestehendes Polrohr von vorzugweise kreisrundem Querschnitt auf.

CN 2517929 Y beschreibt ein weiteres bistabiles Magnetventil für Kühleinrichtungen. Dabei sind drei Kühlmittelkanäle parallel entlang eines Ventilrohrs angeordnet.

Die Aufgabe der Erfindung war daher, eine für große Leitungsquerschnitte skalierbare Prozesskomponente mit Magnetanordnung zu schaffen.

Diese Aufgabe wird gelöst durch eine Prozesskomponente mit den Merkmalen des Anspruchs 1. Die davon abhängigen Ansprüche 2 bis 5 geben vorteilhafte Weiterbildungen an.

Die Prozesskomponente besitzt einen ersten und einen zweiten Anschluss und einen Stellkörper, welcher in einem den ersten mit dem zweiten Anschluss fluidverbindenden Hohlraum der Prozesskomponente angeordnet ist und in einer axialen Richtung innerhalb des Hohlraums in eine erste Stellung und zweite Stellung bringbar ist. Die Prozesskomponente umfasst weiterhin einen Permanentmagneten, eine erste elektrische Spule und eine zweite elektrische Spule. Es ist nun vorgesehen, dass erste Spule, Permanentmagnet und zweite Spule in dieser Reihenfolge in der axialen Richtung hintereinander angeordnet sind und ein Joch vorgesehen ist und Permanentmagnet, Stellkörper und Joch in der ersten Stellung einen ersten geschlossenen magnetischen Kreis und in der zweiten Stellung einen zweiten geschlossenen magnetischen Kreis bilden, dass die erste elektrische Spule eingerichtet ist, den ersten magnetischen Kreis zu kompensieren und die zweite elektrische Spule eingerichtet ist, den zweiten magnetischen Kreis zu kompensieren, und dass Hohlraum und Stellkörper so geformt sind, dass die Prozesskomponente von einer zwischen erstem und zweitem Anschluss ausbildbaren Fluidströmung durchsetzbar ist. Kompensieren bedeutet in diesem Zusammenhang, dass zu einem ersten Magnetfeld mit einer ersten Polung ein zweites Magnetfeld mit einer zum ersten Magnetfeld gegensinnigen Polung erzeugt und dem ersten Magnetfeld überlagert wird, so dass sich die Felder in der Summe aufheben.

Diese Anordnung von Permanentmagnet und Spulen erlaubt es, den Stellkörper mit permanentmagnetischen Kräften in den Stellungen zu halten. Die Spulen müssen nur zum Bewegen des Stellkörpers bestromt werden, oder um kurzzeitig hohe Haltekräfte zu erzeugen. Da die Magnetkreise für die erste und die zweite Stellung von einem Permanentmagneten magnetisch gespeist werden, ist nur eine geringe Menge Magnetmaterial notwendig. Im Zusammenwirken der Merkmale wird erreicht, dass die Prozesskomponente einen großen Leitungsquerschnitt aufweisen kann. Durch diese Merkmale werden magnetische Kräfte im Ventil zum Schließen und Bewegen des Stellkörpers bewirkt, welche den quadratisch mit dem Leitungsdurchmesser zunehmenden Fluidkräften gewachsen sind. Das Verhältnis von elektrischer Leistungsaufnahme zu strömungswirksamen Leitungsquerschnitt erlaubt es erstmalig, das Einsatzfeld über Füllventile hinaus auf Prozesskomponenten zu erweitern, beispielsweise in Brauereien, der Milchwirtschaft und der Feinchemie. Es ist somit eine sehr gute Skalierbarkeit gegeben. Ein anderer Vorteil ist die Möglichkeit, auf Magnetmaterial im Stellkörper zu verzichten, wodurch im Schadensfall Kontamination des Produkts mit Magnetmaterial von Vorneherein ausgeschlossen ist.

Anhand eines Ausführungsbeispiels sollen die Erfindung erklärt und die Vorteile erläutert werden.

Es zeigen:
- **Fig. 1:**: Längsschnitt durch eine Prozesskomponente in einer ersten Stellung eines Stellkörpers;
- **Fig. 2:**: Längsschnitt durch eine Prozesskomponente in einer zweiten Stellung des Stellkörpers;
- **Fig. 3:**: Querschnitt durch die Prozesskomponente der ersten Weiterbildung entlang der Linie A-A;

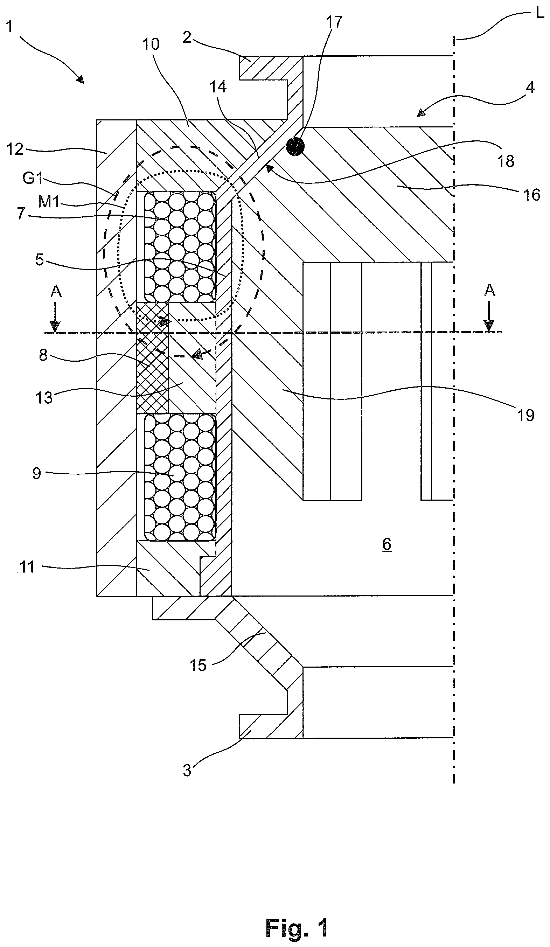

Die **Fig. 1** zeigt einen Schnitt entlang einer Längsachse L durch eine als Ventil **1** ausgeführte Prozesskomponente. Das Ventil 1 weist einen ersten Anschluss **2** und einen zweiten Anschluss **3** zur Aufnahme eines Fluids auf. Diese Anschlüsse **2** und **3** sind verbindbar mit dem Leitungssystem einer Prozessanlage, beispielsweise der Lebensmittelindustrie, der Biotechnologie und in der Pharmazie.

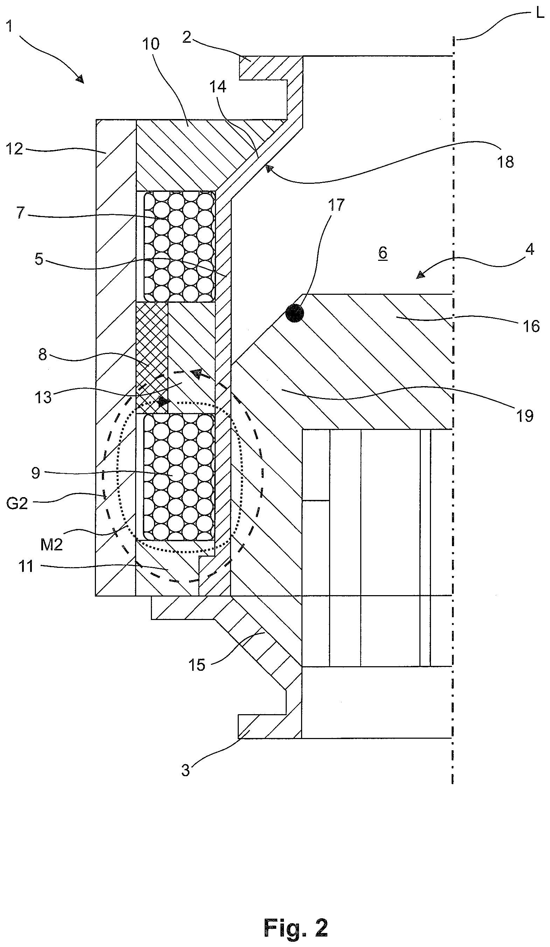

Das Ventil **1** umfasst einen Stellkörper **4,** der in einem Innengehäuse **5** des Ventils **1** angeordnet ist, welches einen Hohlraum **6** umfasst, angeordnet. Der Hohlraum **6** stellt eine Fluidverbindung zwischen den Anschlüssen **2** und **3** her. In dem Hohlraum **6** ist der Stellkörper **4** entlang der Längsachse **L** verschiebbar und kann verschiedene Stellungen innerhalb des Innengehäuses **5** einnehmen. Eine erste Stellung ist in **Fig. 1** gezeigt, eine zweite Stellung in **Fig. 2****.**

Eine erste elektrische Spule **7** umgibt das Innengehäuse **5** derart, dass ihre Wicklungen ganz um das Innengehäuse **5** umlaufen. Auf einer dem ersten Anschluss **2** abgewandten Seite der ersten elektrischen Spule **7** ist ein Permanentmagnet **8** vorgesehen. Auf einer der ersten elektrischen Spule **7** abgewandten Seite des Permanentmagneten **8** ist eine zweite elektrische Spule **9** angeordnet. Diese zweite elektrische Spule **9** umfasst Wicklungen, die vollständig um das Innengehäuse **5** umlaufen. Erste elektrische Spule **7,** Permanentmagnet **8** und zweite elektrische Spule **9** sind somit in dieser Reihenfolge entlang der Längsachse **L** und in somit einer axialen Richtung hintereinander angeordnet.

Zur Führung der Magnetfelder, die durch den Permanentmagneten **8,** sowie durch erste elektrisch Spule **7** und zweite elektrische Spule **9** entstehen und erzeugbar sind, ist ein Joch aus magnetisch leitendem Material vorgesehen. Das Joch umfasst einen ersten Abschlusskörper **10,** der auf einer dem ersten Anschluss **2** zugewandten Seite der ersten elektrischen Spule **7** angeordnet ist und das Innengehäuse **5** berührt. Auf einer dem zweiten Anschluss **3** zugewandten Seite der zweiten elektrischen Spule **9** ist ein zweiter Abschlusskörper **11** angeordnet, der ebenfalls das Innengehäuse **5** berührt.

Ein Außenkörper **12** berührt den ersten und zweiten Abschlusskörper **10** und **11** sowie den Permanentmagneten **8.** Wie in **Fig. 1** gezeigt, ist zwischen Permanentmagnet **8** und Innengehäuse **5** ein Jochabschnitt **13** angeordnet, der sowohl mit dem Permanentmagneten **8** als auch dem Innengehäuse **5** in berührendem Kontakt steht. Der Jochabschnitt **13** kann einteilig mit dem Innengehäuse **5** ausgeführt sein.

Zur Begrenzung der Bewegung des Stellkörpers **4** innerhalb des Hohlraums **6** entlang der Längsachse **L** sind ein erster mechanischer Anschlag **14** und ein zweiter mechanischer Anschlag **15** vorgesehen. Der erste mechanische Anschlag **14** befindet sich in Bezug zur Längsachse **L** zwischen dem ersten Anschluss **2** und der ersten elektrischen Spule **7.** Der zweite mechanische Anschlag **15** befindet sich in Bezug zur Längsachse L zwischen der zweiten elektrischen Spule 9 und dem zweiten Anschluss **3.**

Der Stellkörper **4** besitzt ein Verschlusselement **16,** mit welchem der erste Anschluss **2** verschließbar ist. Eine optionale Dichtung **17** ist derart am Stellkörper **4** angeordnet, dass sie in der in **Fig. 1** gezeigten ersten Stellung des Stellkörpers **4** mit dem ersten mechanischen Anschlag **14** dichtend zusammenwirkt. Vorteilhaft umfasst der erste mechanische Anschlag **14** einen Ventilsitz **18.** Stellkörper **4,** Dichtung **17** und erster mechanischer Anschlag **14** können so ausgeführt sein, dass es zu einer linienartigen Berührung der Dichtung **17** mit dem Ventilsitz **18** kommt und zwischen Stellkörper **4** und erstem mechanischem Anschlag **14** ein enger Spalt verbleibt, der mit der Dichtung **17** abgedichtet ist. Der Spalt kann im Bereich eines Zehntels eines Millimeters liegen.

Der Stellkörper **4** umfasst einen Längskörper **19,** welcher sich in Richtung der Längsachse **L** erstreckt und aus einem magnetisch leitenden Material geformt ist. Der Längskörper **19** ist vorzugsweise so gestaltet, dass er mehrere Funktionen besitzt. Zum einen besitzt er eine radiale Ausdehnung, die zusammen mit der Längserstreckung eine Ausrichtung und Führung des Stellkörpers **4** und Verschlusselements **16** im Hohlraum **6** bewirkt. Die Ausdehnung des Längskörpers in Richtung der Längsachse **L** ist vorzugsweise nach den folgenden Gesichtspunkten bemessen. In der erster Stellung steht der Längskörper **19** in Kontakt mit dem ersten mechanischen Anschlag **14.** Der Längskörper **19** erstreckt sich dann in Richtung der Längsachse **L** über die erste elektrische Spule **7** und den Permanentmagneten **8.** In einer zweiten Stellung, die in **Fig. 2** dargestellt ist, befindet sich der Längskörper **19** in Kontakt mit dem zweiten mechanischen Anschlag **15.** Der Längskörper **19** erstreckt sich dann über den Permanentmagneten **8** und die zweite elektrische Spule **9.** Durch das Zusammenwirken mit den mechanischen Anschlägen **14** und **15** erfüllt der Längskörper **19** die Funktion des Positionierens des Stellkörpers **4** in Richtung der Längsachse **L.** Neben den genannten Funktionen übernimmt der Längskörper **19** auch das Führen der Magnetfelder zum Schließen von magnetischen Kreisen, wie nachfolgend näher erläutert werden wird.

In **Fig. 1** ist der Stellkörper **4** in der ersten Stellung gezeigt, in der er sich in Kontakt mit dem ersten mechanischen Anschlag **14** befindet, wobei der Kontakt unter Ausbildung des bereits erwähnten Spaltes zwischen Dichtung und Ventilsitz **18** besteht. In dieser Stellung ist ein erster magnetischer Kreis geschlossen, der Längskörper **19,** ersten Abschlusskörper **10,** Außenkörper **12** und Jochabschnitt **13** umfasst. Ebenfalls in diesem Magnetkreis befindet sich der Dauermagnet **8,** dessen Magnetfeld den Magnetkreis speist. In dem Magnetkreis bildet sich ein erstes Magnetfeld **M1** aus, welches eine Haltekraft bewirkt, die den Stellkörper **4** in der ersten Stellung fixiert.

Um den Stellkörper **4** aus der ersten Stellung zu entfernen, wird impulsartig eine Spannung an die erste elektrische Spule 7 angelegt. Durch den entstehenden Stromimpuls wird dem ersten Magnetkreis kurzzeitig ein erstes Gegenfeld **G1** aufgeprägt. Seine Polung ist dem ersten Magnetfeld **M1** entgegengerichtet, so dass sich die Felder **M1** und **G1** weitgehend kompensieren, kein Feld verbleibt und die Haltekraft wegfällt. Der Permanentmagnet **8** übt nun eine Reluktanzkraft auf den Längskörper **19** aus, so dass der Stellkörper **4** aus der ersten Stellung hinaus in Richtung des zweiten mechanischen Anschlags **15** bewegt wird. Um den Stellkörper 4 weiter in die zweite Stellung zu bewegen, kann an die zweite Spule **9** eine Spannung zur Erzeugung eines Stromflusses und Magnetfeldes angelegt werden, welches Magnetfeld die Bewegung des Stellkörpers **4** bewirkt.

In **Fig. 2** ist der Stellkörper **4** in der zweiten Stellung gezeigt, in der sich der Längskörper **19** des Stellkörpers **4** in Kontakt mit dem zweiten mechanischen Anschlag **15** befindet. In dieser Stellung ist ein zweiter magnetischer Kreis geschlossen, der den Permanentmagneten **8,** den zweiten Abschlusskörper **11,** den Außenkörper **12,** den Jochabschnitt **13** und den Längskörper **19** umfasst. In dem zweiten Magnetkreis wird durch den Permanentmagneten **8** ein zweites Magnetfeld **M2** erzeugt. Die Feldlinien des zweiten Magnetfeldes **M2** umgeben in den genannten Bauteilen geführt die zweite elektrische Spule **9.** Durch das Magnetfeld **M2** wird eine Haltekraft erzeugt, die den Längskörper **19** des Stellkörpers **4** in Kontakt mit dem zweiten mechanischen Anschlag **15** hält.

Um den Stellkörper **4** aus der zweiten Stellung zu entfernen, wird impulsartig eine Spannung an die zweite elektrische Spule **9** angelegt. Durch den entstehenden Stromimpuls wird dem zweiten Magnetkreis kurzzeitig ein zweites Gegenfeld **G2** aufgeprägt. Seine Polung ist dem zweiten Magnetfeld **M2** entgegengerichtet, so dass sich die Felder **M2** und **G2** weitgehend kompensieren, kein Feld verbleibt und die Haltekraft wegfällt. Der Permanentmagnet **8** übt nun eine Reluktanzkraft auf den Längskörper **19** aus, so dass der Stellkörper **4** aus der zweiten Stellung hinaus in Richtung des ersten mechanischen Anschlags **14** bewegt wird. Um den Stellkörper 4 in die erste Stellung zu bewegen, kann an die erste Spule **7** eine Spannung zur Erzeugung eines Stromflusses und Magnetfeldes angelegt werden, welches Magnetfeld die Bewegung des Stellkörpers **4** bewirkt.

In der zweiten Stellung des Stellkörpers **4** gemäß **Fig. 2** gibt das Verschlusselement **16** den ersten Anschluss **2** frei. Der Stellkörper **4** und der Hohlraum **6** sind so geformt, dass die Prozesskomponente von einer zwischen erstem und zweitem Anschluss **2** und **3** ausbildbaren Fluidströmung durchsetzbar ist. Im gezeigten Beispiel wird dies erreicht, indem sich der Längskörper **19** in Richtung eines Umfangs des Stellkörpers **4** nur über eine Teillänge erstreckt und das Verschlusselement **16** in der zweiten Stellung umströmbar ist, indem entlang des Umfangs wenigstens abschnittsweise ein Freiraum zwischen Innengehäuse **5** und Verschlusselement **16** vorgesehen ist.

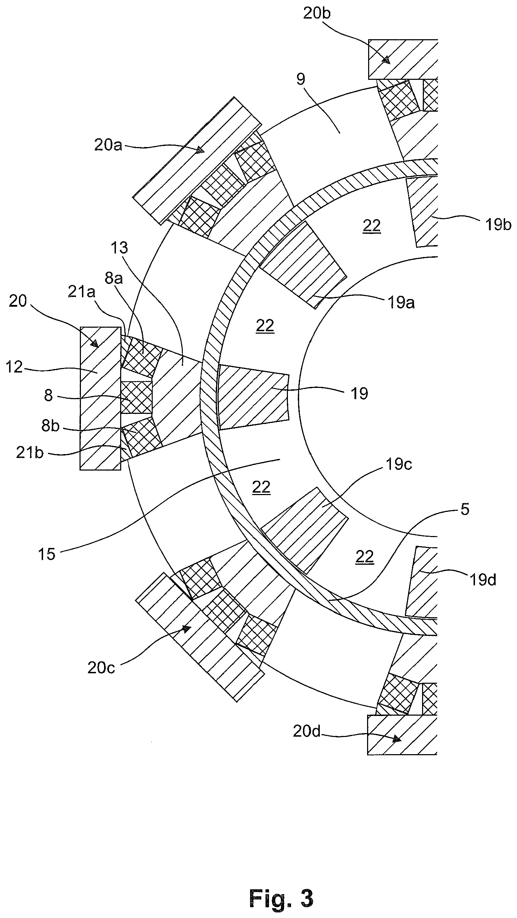

Zur Verdeutlichung zeigt **Fig. 3** einen Schnitt auf Höhe der Linie A-A aus **Fig. 1****.**

Zwischen dem Außenkörper **12** und dem Innengehäuse **5** ist der Permanentmagnet **8** angeordnet. In einer in der Zeichenebene liegenden Umfangsrichtung sind benachbart zum Permanentmagneten **8** auf einer ersten Seite und einer der ersten Seite gegenüberliegenden zweiten Seite weitere Permanentmagneten **8a** und **8b** vorgesehen. Sie berühren den Jochabschnitt **13,** welcher auf einer dem Innengehäuse **5** abgewandten Seite breit genug ist, mit allen Permanentmagneten **8, 8a** und **8b** in vollflächigem Kontakt zu stehen. Auf einer dem Innengehäuse **5** zugewandten Seite weist der Jochabschnitt **13** eine Breite auf, die etwa einer Breite des Längskörpers **19** entspricht. Die Abmessungen sind so gewählt, dass die von den Permanentmagneten **8, 8a** und **8b** induzierten Magnetfelder in Richtung auf den Längskörper **19** gebündelt werden, das Innengehäuse 5 durchsetzen und weitgehend verlustfrei in den Längskörper **19** übertreten. Hierdurch ist eine hohe Dichte von Feldlinien im Längskörper **19** gegeben, womit die Haltekraft bei geschlossenem Magnetkreis erhöht wird. Alternativ zu einer Mehrzahl von Permanentmagneten **8, 8a** und **8b** kann ein bogenartig geformter Permanentmagnet eingesetzt werden. Alternativ oder zusätzlich kann eine weitere Ebene von Permanentmagneten parallel zu Permanentmagnet **8** in Richtung der Längsachse L vorgesehen sein. Die Permanentmagneten **8, 8a** und **8b** stehen in berührendem Kontakt mit dem Außenkörper **12,** damit die Magnetfelder möglichst gut verlustarm übertragen werden. Dazu können Leitstücke **21** benutzt werden, die Spalte vermeiden. Alternativ kann der Außenkörper **12** Formelemente aufweisen, die die Funktion der Leitstücke **21a** und **21b** übernehmen, oder die Permanentmagnete **8a** und **8b** sind formschlüssig geformt.

Alternativ zur gezeigten Ausführung kann der Jochabschnitt **13** einstückig mit dem Innengehäuse **5** ausgeführt sein.

Der Außenkörper **12,** die Permanentmagneten **8, 8a** und 8b, der Jochabschnitt **13** und die Leitstücke **21a** und **21b** bilden zusammen eine Permanentmagnetanordnung **20.** Erfindungsgemäß sind entlang des Umgangs des Innengehäuses **5** mehrere Permanentmagnetanordnung **20, 20a, 20b, 20c** und **20d** vorgesehen, wobei jede mit einem einzelnen Längskörper **19** des Stellkörpers **4** zusammenwirkt, der zu diesem Zweck eine Mehrzahl Längskörper **19** aufweist. Zwischen benachbarten Längskörpers **19** ist ein Kanal **22** zur Strömungsführung ausgebildet, wobei sich der Kanal **22** bis zum Verschlusselement **16** fortsetzt. Dies ist so bemessen, dass das Verschlusselement **16** in der zweiten Stellung von Fluid umströmbar ist, das durch den ersten oder den zweiten Anschluss **2** und **3** eintritt, und dass in der ersten Stellung eine hinreichende Sperrwirkung des Verschlusselements **16** zur Unterbindung einer Fluidströmung zwischen erstem und zweitem Anschluss **2** und 3 gegeben ist.

Erfindungsgemäß ist das Innengehäuse **5** aus einem magnetisch gut leitendem Material hergestellt, so dass die magnetisch wirksamen Luftspalte in den Magnetkreisen reduziert werden, insbesondere im Bereich des Jochabschnitts **13** und den Kontaktbereichen zu erstem Abschlusskörper und zweitem Abschlusskörper **10** und **11.** Vorteilhaft ist es, wenn die magnetischen Leitfähigkeiten der Materialien für Innengehäuse **5** und Längskörper **19** etwa in der gleichen Größenordnung liegen.

Es ist vorteilhaft, den ersten mechanischen Anschlag **14,** den zweiten mechanischen Anschlag **15** oder beide Anschläge **14** und **15** und die jeweils korrespondierende Fläche am Stellkörper **4** konisch auszuformen, wie es in **Fig. 1** und **Fig. 2** gezeigt ist. Hierdurch ist bei der Bewegung des Stellkörpers **4** in Richtung der Längsachse **L** aus einer von erster und zweiter Stellung die Zunahme des magnetisch aktiven Spaltes zwischen Anschlusskörper **10** und **11** und Stellkörper **4** kleiner als die vom Stellkörper **4** entlang der Längsachse **L** zurückgelegte Strecke. Die Haltekraft wird auf diese Weise langsamer abgebaut als beispielsweise bei einer zur Längsachse L senkrechten Fläche. Außerdem verbessert eine solche Gestaltung die Führung eines Fluidstromes durch die Prozesskomponente.

### Bezugszeichenliste

- 1: Ventil
- 2: erster Anschluss
- 3: zweiter Anschluss
- 4: Stellkörper
- 5: Innengehäuse
- 6: Hohlraum
- 7: erste elektrische Spule
- 8, 8a, 8b: Permanentmagnet
- 9: zweite elektrische Spule
- 10: erster Abschlusskörper
- 11: zweiter Abschlusskörper
- 12: Außenkörper
- 13: Jochabschnitt
- 14: erster mechanischer Anschlag
- 15: zweiter mechanischer Anschlag
- 16: Verschlusselement
- 17: Dichtung
- 18: Ventilsitz
- 19: Längskörper
- 19a, 19b, 19c, 19d: Längskörper
- 20, 20a, 20b, 20c, 20d: Permanentmagnetanordnung
- 21a, 21b: Leitstück
- 22: Kanal

- L: Längsachse
- M1: erstes Magnetfeld
- M2: zweites Magnetfeld
- G1: erstes Gegenfeld
- G2: zweites Gegenfeld

## Patentansprüche

1. Prozesskomponente mit einem ersten Anschluss (2) und einem zweiten Anschluss (3) und einem Stellkörper (4), welcher in einem den ersten Anschluss (2) mit dem zweiten Anschluss (3) fluidverbindenden Hohlraum (6) der Prozesskomponente angeordnet ist und in einer axialen Richtung innerhalb des Hohlraums (6) in eine erste Stellung und zweite Stellung bringbar ist, und mit einem Permanentmagneten (8), einer ersten elektrischen Spule (7) und einer zweiten elektrischen Spule (9), wobei ein Joch vorgesehen ist und Permanentmagnet (8), Stellkörper (4) und Joch in der ersten Stellung einen ersten geschlossenen magnetischen Kreis und in der zweiten Stellung einen zweiten geschlossenen magnetischen Kreis bilden, wobei die erste
elektrische Spule (7) eingerichtet ist, den ersten magnetischen Kreis zu kompensieren und die zweite elektrische Spule (9) eingerichtet ist, den zweiten magnetischen Kreis zu kompensieren, und wobei Hohlraum (6) und Stellkörper (4) so geformt sind, dass die Prozesskomponente von einer zwischen erstem Anschluss (2) und zweitem Anschluss (3) ausbildbaren Fluidströmung durchsetzbar ist, wobei erste Spule (7), Permanentmagnet (8) und zweite Spule (9) in dieser Reihenfolge in der axialen Richtung (L) hintereinander angeordnet sind, wobei die Formgebung des Jochs zwischen Permanentmagnet (8) und Stellkörper (19) eine Bündelung des Magnetfeldes bewirkt, und wobei der Stellkörper (4) einen Längskörper (19) umfasst, welcher in einer von erster oder zweiter Stellung mit dem Joch unter Ausbildung eines von erstem oder zweiten Magnetkreis zusammenwirkt, **dadurch gekennzeichnet, dass** der Stellkörper (4) innerhalb eines magnetisch leitfähigen Innengehäuses (5) angeordnet ist, **dass** der Längskörper eine Mehrzahl von Längskörpern (19, 19a, 19b, 19c, 19d) umfasst, welche am Umfang des Stellkörpers verteilt und voneinander beabstandet angeordnet sind, und **dass** das Joch zwischen Permanentmagnet (8) und Innengehäuse (5) angeordnete Jochabschnitte (13) umfasst, deren Breite auf einer dem Innengehäuse (5) zugewandten Seite etwa einer Breite der Längskörper (19, 19a, 19b, 19c, 19d) entspricht.

2. Prozesskomponente nach Anspruch 1, wobei ein erster mechanischer Anschlag (14) die Position des Stellkörpers (4) in der ersten Stellung definiert.

3. Prozesskomponente nach Anspruch 1 oder 2, wobeiein zweiter mechanischer Anschlag (15) die Position des Stellkörpers (4) in der zweiten Stellung definiert.

4. Prozesskomponente nach einem der vorhergehenden Ansprüche, wobei die Prozesskomponente einen Ventilsitz (18) umfasst und am Stellkörper (4) ein Verschlusselement (16) angeordnet ist, welches in der ersten Endstellung dichtend mit dem Ventilsitz (18) zusammenwirkt.

5. Prozesskomponente nach einem der vorhergehenden Ansprüche, wobei die magnetische Leitfähigkeit des Innengehäuses (5) wenigstens der des Längskörpers (19) entspricht.

## Claims

1. A process component having a first connection (2) and a second connection (3) and an actuating body (4) which is arranged in a cavity (6), the cavity connecting the first connection (2) to the second connection (3) in a fluid-conducting manner, of the process component and which can be brought into a first position and a second position in an axial direction within the cavity (6), and having a permanent magnet (8), a first electric coil (7), and a second electric coil (9), wherein a yoke is provided and the permanent magnet (8), the actuating body (4), and the yoke form a first closed magnetic circuit in the first position and a second closed magnetic circuit in the second position, wherein the first electric coil (7) is configured to compensate the first magnetic circuit and the second electric coil (9) is configured to compensate the second magnetic circuit, and wherein the cavity (6) and the actuating body (4) are shaped such that a fluid flow that can be formed between the first connection (2) and the second connection (3) can pass through the process component, wherein the first coil (7), the permanent magnet (8), and the second coil (9) are arranged in this order one behind the other in the axial direction (L), wherein the shape of the yoke between the permanent magnet (8) and the actuating body (19) causes a concentration of the magnetic field, and wherein the actuating body (4) comprises a longitudinal body (19), which interacts with the yoke in one of the first or second position to form one of a first or second magnetic circuit, **characterized in that** the actuating body (4) is arranged within a magnetically conductive inner housing (5), **in that** the longitudinal body comprises a plurality of longitudinal bodies (19, 19a, 19b, 19c, 19d) which are distributed around the circumference of the actuating body and are arranged at a distance from one another, and **in that** the yoke comprises yoke portions (13) that are arranged between the permanent magnet (8) and the inner housing (5) and have a width, on a side facing the inner housing (5), that approximately corresponds to the width of the longitudinal bodies (19, 19a, 19b, 19c, 19d).

2. The process component according to claim 1, wherein a first mechanical stop (14) defines the position of the actuating body (4) in the first position.

3. The process component according to claim 1 or 2, wherein a second mechanical stop (15) defines the position of the actuating body (4) in the second position.

4. The process component according to one of the preceding claims, wherein the process component comprises a valve seat (18), and a closure element (16), which interacts in a sealing manner with the valve seat (18) in the first end position, is arranged on the actuating body (4).

5. The process component according to one of the preceding claims, wherein the magnetic conductivity of the inner housing (5) corresponds at least to that of the longitudinal body (19).

## Revendications

1. Composant de processus comprenant un premier raccord (2) et un deuxième raccord (3), ainsi qu'un corps de réglage (4), lequel est disposé dans une cavité (6) du composant de processus reliant fluidiquement le premier raccord (2) au deuxième raccord (3) et peut être amené dans une première position et une deuxième position, dans une direction axiale, à l'intérieur de la cavité (6), et comprenant un aimant permanent (8), une première bobine électrique (7) et une deuxième bobine électrique (9), dans lequel il est prévu une culasse, et l'aimant permanent (8), le corps de réglage (4) et la culasse forment un premier circuit magnétique fermé dans la première position et un deuxième circuit magnétique fermé dans la deuxième position, dans lequel la première bobine électrique (7) est configurée pour compenser le premier circuit magnétique et la deuxième bobine électrique (9) est configurée pour compenser le deuxième circuit magnétique, et dans lequel la cavité (6) et le corps de réglage (4) sont formés de telle façon que le composant de processus peut être traversé par un flux de fluide susceptible d'être formé entre le premier raccord (2) et le deuxième raccord (3), dans lequel la première bobine (7), l'aimant permanent (8) et la deuxième bobine (9) sont disposés successivement dans cet ordre dans la direction axiale (L), dans lequel la conformation de la culasse entre l'aimant permanent (8) et le corps de réglage (19) provoque une concentration du champ magnétique, et dans lequel le corps de réglage (4) comporte un corps allongé (19), lequel coopère avec la culasse dans l'une parmi la première et la deuxième position, en formant l'un parmi le premier ou le deuxième circuit magnétique, **caractérisée en ce que** le corps de réglage (19) est disposé à l'intérieur d'un boîtier interne magnétiquement conducteur (5), **en ce que** le corps allongé comporte une pluralité de corps allongés (19, 19a, 19b, 19c, 19d) répartis sur la circonférence du corps de réglage et espacés les uns des autres, et **en ce que** la culasse comporte des sections de culasse (13) disposées entre l'aimant permanent (8) et le boîtier interne (5), dont la largeur correspond approximativement à une largeur des corps allongés (19, 19a, 19b, 19c, 19d) sur un côté tourné vers le boîtier interne (5).

2. Composant de processus selon la revendication 1, dans lequel une première butée mécanique (14) définit le positionnement du corps de réglage (4) dans la première position.

3. Composant de processus selon la revendication 1 ou 2, dans lequel
une deuxième butée mécanique (15) définit le positionnement du corps de réglage (4) dans la deuxième position.

4. Composant de processus selon l'une des revendications précédentes, dans lequel
le composant de processus comporte un siège de soupape (18) et un élément de fermeture (16) coopérant de façon étanche avec le siège de soupape (18) dans la première position d'extrémité est disposé sur le corps de réglage (4).

5. Composant de processus selon l'une des revendications précédentes, dans lequel
la conductivité magnétique du boîtier interne (5) correspond au moins à celle du corps allongé (19).
